# EUROPEAN PATENT APPLICATION

(11) **EP 4 622 188 A1**
(43) Date of publication of application: **24.09.2025**
(21) Application number: 25163655.1
(22) Date of filing: 13.03.2025
(51) Int. Cl.: H04L 12/403

(54) **COMMUNICATION CIRCUIT, COMMUNICATION SYSTEM, AND AIR CONDITIONING SYSTEM**

(30) Priority: 22.03.2024 CN 202410333826
(71) Applicant: Carrier Corporation, Palm Beach Gardens, FL 33418 (US)
(72) Inventor: NI, Jian, Shanghai, 201206 (CN); GUO, Xiaojun, Shanghai, 201206 (CN)
(74) Representative: Dehns

(57) **Abstract**

The present invention relates to the technical field of bus communication, in particular to a communication circuit (100), a communication system (300), and an air conditioning system (400) provided with the communication circuit and the communication system. The communication circuit includes a master control chip (1), a first data bus transceiver (21), a second data bus transceiver (22), and a switch circuit (3). The first data bus transceiver (21) has one end connected to the master control chip (1) and the other end connected to a first external device (401); the second data bus transceiver (22) has one end connected to the master control chip (1) and the other end connected to a second external device (402); and the switch circuit (3) is connected to the first data bus transceiver (21) and the second data bus transceiver (22). The communication circuit can realize automatic switching of two independent RS485 communication buses according to a requirement of communication data, thereby realizing device interconnection and real-time data exchange on the two independent RS485 communication buses. Accordingly, the communication efficiency is improved, facilitating direct parameter modification and program upgrading of a slave device by a central processing unit.

## Description

### Technical Field

The present invention relates to the technical field of bus communication, in particular to a communication circuit, a communication system, and an air conditioning system with the communication circuit and the communication system.

### Background Art

In a bus communication system in the related art, a master device may be respectively connected to different external devices by using different RS485 communication buses, thereby realizing independent communication with the respective external devices. For example, in a central air conditioning system, when a central controller controls a plurality of devices in a central air conditioning system unit, one master device needs to be selected from the plurality of devices, the central controller is in communication connection with the master device through one communication bus, and the master device is in communication connection with all other slave devices through another independent communication bus.

In the prior art, the central controller could only directly communicate with the master device, and access to the slave device needed to be transferred through the master device, so that signal transmission between the central controller and the slave device occupies more communication resources, the communication efficiency is low, and the real-time performance is poor.

### Summary of the Invention

This specification discloses a communication circuit, which can realize automatic switching of two independent RS485 communication buses according to a requirement of communication data, thereby realizing device interconnection and real-time data exchange on the two independent RS485 communication buses. Accordingly, the communication efficiency is improved, facilitating direct parameter modification and program upgrading of a slave device by a central processing unit.

According to a first aspect of the invention there is provided a communication circuit, including a master control chip, a first data bus transceiver, a second data bus transceiver, and a switch circuit. The first data bus transceiver has one end connected to the master control chip and the other end connected to a first external device; the second data bus transceiver has one end connected to the master control chip and the other end connected to at least one second external device; and the switch circuit is connected to the first data bus transceiver and the second data bus transceiver.

Optionally, the master control chip in the communication circuit is connected to the switch circuit to control on/off of the switch circuit.

Optionally, the first data bus transceiver in the communication circuit is a first RS485 chip, and the second data bus transceiver is a second RS485 chip.

Optionally, the switch circuit in the communication circuit includes a buffer and an inverter, the buffer is respectively connected to the first RS485 chip and the second RS485 chip, and the inverter is respectively connected to the first RS485 chip and the second RS485 chip.

Optionally, the buffer includes: a buffer first input terminal connected to an output receiving pin of the first RS485 chip; a buffer first output terminal connected to an input transmitting pin of the second RS485 chip; a buffer second input terminal connected to an output receiving pin of the second RS485 chip; and a buffer second output terminal connected to an input transmitting pin of the first RS485 chip.

Optionally, the inverter includes: an inverter first input terminal connected to the output receiving pin of the first RS485 chip; an inverter first output terminal connected to a receive enable pin and a transmit enable pin of the second RS485 chip; an inverter second input terminal connected to the output receiving pin of the second RS485 chip; and an inverter second output terminal connected to a receive enable pin and a transmit enable pin of the first RS485 chip.

Optionally, a communication pin of the first RS485 chip and a communication pin of the second RS485 chip are both connected with a pull-up resistor and/or a pull-down resistor.

Optionally, the master control chip includes: a switch signal pin respectively connected to an enable pin of the buffer and an enable pin of the inverter; an enable pin respectively connected to the first RS485 chip and the second RS485 chip; a data receiving pin respectively connected to the first RS485 chip and the second RS485 chip; and a data transmitting pin respectively connected to the first RS485 chip and the second RS485 chip.

According to a second aspect of the invention there is provided a communication system, including a central controller; a slave control chip; and the communication circuit described above. In the communication system, a first data bus transceiver is connected to the central controller, and a second data bus transceiver is connected to the slave control chip.

According to a third aspect of the invention there is provided an air conditioning system, including a host; a first external device; and at least one second external device. In the air conditioning system, the host includes the communication system described above, a first data bus transceiver is connected to the first external device, and a second data bus transceiver is connected to the at least one second external device.

In the technical solution of this invention, the first data bus transceiver and the second data bus transceiver in the communication circuit can be directly connected through the switch circuit, automatic switching of the connection between the first data bus transceiver and the second data bus transceiver can be realized according to a requirement of communication data, thereby realizing interconnection and real-time data exchange on an external device connected with the two layers of data buses. When the communication circuit described above is applied to the air conditioning system, the central controller can be in communication connection with the master control chip through the first data bus transceiver, or can communicate through the first data bus transceiver, the switch circuit, and the second data bus transceiver in sequence to realize direct communication connection with the slave control chip without executing signal transfer through the master control chip, thereby allowing the central controller to directly execute signal transmission on the slave control chip, thereby implementing actions on the slave device such as parameter control and program updating. For the air conditioning system, the devices on the two data buses realize interconnection and real-time data exchange, which greatly improves the efficiency of data transmission between a plurality of unit devices such as indoor units and outdoor units, and the efficiency of data and program communication maintenance between the master device and the slave device in the overall air conditioning system.

### Descriptions of the Drawings

Certain exemplary embodiments will now be described in greater detail by way of example only and with reference to the accompanying drawings in which:
FIG. 1 is a schematic diagram of a master device communication circuit of an air conditioning system in the prior art;
FIG. 2 is a schematic diagram of a communication circuit;
FIG. 3 is a schematic diagram of a communication circuit;
FIG. 4 is a schematic diagram of a communication system; and
FIG. 5 is a schematic diagram of an air conditioning system.

### List of Reference Numerals:

Central controller 101, slave control chip 102, master control chip IC01, RS485 chip IC02, RS485 chip IC03, central controller 201, slave control chip 202, communication circuit 100, master control chip 1, first data bus transceiver 21, second data bus transceiver 22, switch circuit 3, level conversion circuit 30, control chip IC1, first RS485 chip IC2, second RS485 chip IC3, buffer IC4, inverter IC5, communication system 300, central controller 301, slave control chip 302, air conditioner 400, first external device 401, second external device 402, host 403.

### Detailed Description

First, it should be noted that compositions, working principles, features, advantages, and the like of the communication circuit, the communication system, and the air conditioning system according to this invention will be described below by way of example. However, it should be understood that all descriptions are given for illustrative purposes only, and thus should not be understood as any limitation to this invention.

In addition, for any single technical feature described or implicit in the embodiments mentioned herein, or any single technical feature illustrated or implicit in the drawings, this invention still allows any combination or deletion between these technical features (or their equivalents) without any technical obstacles, thereby obtaining more other embodiments of this invention that may not be directly mentioned herein.

In the prior art, an air conditioning system includes a central controller and a plurality of controlled devices, the plurality of controlled devices include a master device and a plurality of slave devices, and the central controller may transmit a control signal to the controlled devices to execute actions such as controlling command program updating.

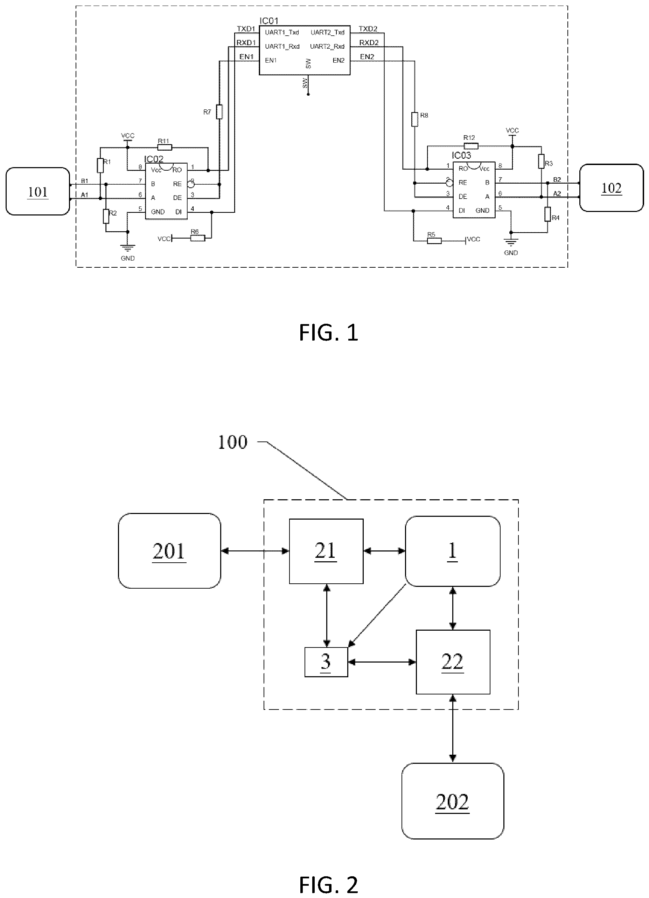

FIG. 1 is a schematic diagram of a master device communication circuit of an air conditioning system in the prior art.

As shown in FIG. 1, the master device communication circuit includes a master control chip IC01 and two independent data bus transceivers, that is, an RS485 chip IC02 and an RS485 chip IC03. The master control chip IC01 is connected to the central controller 101 through the RS485 chip IC02, and the master control chip IC01 is connected to the slave control chip 102 in the slave device through the RS485 chip IC03. In other words, the central controller 101 can only directly control and communicate with the master device through the master control chip IC01, and when the central controller 101 needs to control and communicate with the slave device, a control signal of the central controller 101 is transmitted to the master control chip IC01 via the RS485 chip IC02 for transfer, and then is transmitted to the slave control chip 102 in the slave device through the RS485 chip IC03 to control and communicate with the slave device, and vice versa. The signal transmission between the central controller 101 and the slave control chip 102 occupies more communication resources and the communication efficiency is low.

### [First Embodiment]

FIG. 2 is a schematic diagram of a communication circuit according to a first embodiment of the present invention.

As shown in FIG. 2, in the first embodiment of the present invention, a communication circuit 100 is provided, including a master control chip 1, a first data bus transceiver 21, a second data bus transceiver 22, and a switch circuit 3.

The master control chip 1 is a control unit of the master device, and may implement functions such as control, calculation, data storage, transmission, and processing. One end of the first data bus transceiver 21 is connected to the master control chip 1, the other end thereof is connected to the first external device, that is, the central controller 201, and the first data bus transceiver 21 is configured to implement data communication between the master control chip 1 and the first external device, that is, the central controller 201. One end of the second data bus transceiver 22 is connected to the master control chip 1, the other end thereof is connected to at least one second external device, that is, the slave control chip 202, and the second data bus transceiver 22 may implement data communication between the master control chip 1 and the second external device, that is, the slave control chip 202.

The switch circuit 3 connects the first data bus transceiver 21 and the second data bus transceiver 22, and when the switch circuit 3 is turned off, the first data bus transceiver 21 and the second data bus transceiver 22 work independently of each other, and the central controller 201 and the slave control chip 202 can communicate with each other through a relay of the master control chip 1. When the switch circuit 3 is turned on, the first data bus transceiver 21 and the second data bus transceiver 22 are directly connected, that is, the central controller 201 connected to the first data bus transceiver 21 and the slave control chip 202 connected to the second data bus transceiver 22 respectively can implement direct communication connection without executing signal transfer through the master control chip 1, and the central controller 201 can directly execute signal transmission with the slave control chip 202, thereby allowing the central controller 201 to efficiently execute communication such as parameter control and program updating of the slave device.

Alternatively, in the first embodiment of the present invention, the master control chip 1 in the communication circuit 100 is connected to a control terminal of the switch circuit 3, and the master control chip 1 can control on/off of the switch circuit 3. When the communication circuit 100 works, the master control chip 1 may receive and monitor transmission data in the first data bus transceiver 21 and the second data bus transceiver 22. When it is detected that the data is to be transmitted to the master control chip 1, the master control chip 1 controls the switch circuit 3 to be turned off, thereby allowing all transmission data to flow through the master control chip 1; and when it is detected that the data is to be transmitted to the central controller 201 and the slave control chip 202, the master control chip 1 controls the switch circuit 3 to be turned on, so that the first data bus transceiver 21 and the second data bus transceiver 22 are directly connected, and data transmission between the central controller 201 and the slave control chip 202 can be directly executed through the first data bus transceiver 21 and the second data bus transceiver 22.

### [Second Embodiment]

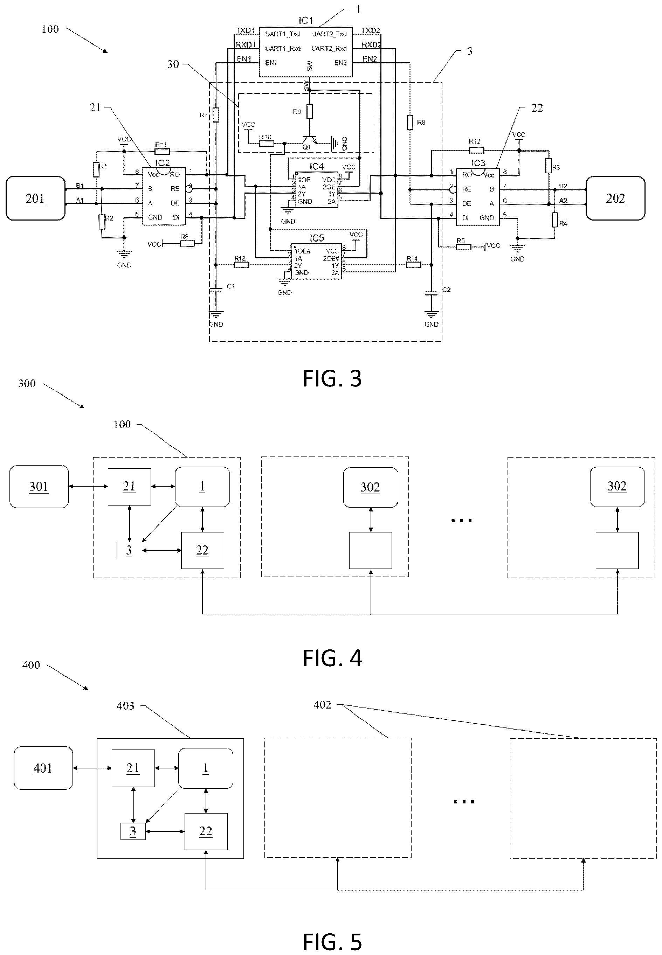

FIG. 3 is a schematic diagram of a communication circuit according to a second embodiment of the present invention. Unless otherwise specified, reference numerals used in the second embodiment of the present invention that are the same as those used in the first embodiment of the present invention refer to the same components or circuit structures.

As shown in FIG. 3, in the second embodiment of the present invention, a communication circuit 100 is provided, including a master control chip 1, a first data bus transceiver 21, a second data bus transceiver 22, and a switch circuit 3.

In the second embodiment of the present invention, the master control chip 1 in the communication circuit 100 is set as a master control chip IC1, the first data bus transceiver 21 is configured as a first RS485 chip IC2, and the second data bus transceiver 22 is configured as a second RS485 chip IC3.

The master control chip IC1 includes a first data transmitting pin TXD1, a first data receiving pin RXD1, a second data transmitting pin TXD2, a second data receiving pin RXD2, a first enable pin EN1, a second enable pin EN2, and a switch pin SW. The first data transmitting pin TXD1 is connected to an input transmitting pin DI of the first RS485 chip IC2 and is configured to transmit a signal to the first RS485 chip IC2; the first data receiving pin RXD1 is connected to an output receiving pin RO of the first RS485 chip IC2 and is configured to receive a signal output by the first RS485 chip IC2; the second data transmitting pin TXD2 is connected to an input transmitting pin DI of the second RS485 chip IC3 and is configured to transmit a signal to the second RS485 chip IC3; the second data receiving pin RXD2 is connected to an output receiving pin RO of the second RS485 chip IC3 and is configured to receive a signal output by the second RS485 chip IC3; the first enable pin EN1 is respectively connected to a receive enable pin RE and a transmit enable pin DE of the first RS485 chip IC2 through a resistor R7 and is configured to control a working mode, that is, a receiving mode and a transmitting mode of the first RS485 chip IC2; the second enable pin EN2 is respectively connected to a receive enable pin RE and a transmit enable pin DE of the second RS485 chip IC3 through a resistor R8 and is configured to control a working mode, that is, a receiving mode and a transmitting mode of the second RS485 chip IC3; and the switch pin SW is connected to the switch circuit 3 and is configured to control on/off of the switch circuit 3.

The first RS485 chip IC2 includes a power supply pin Vcc, a ground pin GND, a connection terminal A, a connection terminal B, an output receiving pin RO, an input transmitting pin DI, a transmit enable pin DE, and a receive enable pin RE. The power supply pin Vcc and the ground pin GND are respectively connected to a power supply terminal VCC and the ground terminal GND and are configured to supply power to the first RS485 chip IC2. The connection terminal A and the connection terminal B are connected to the central controller 201 and are configured to implement data transmission between the first RS485 chip IC2 and the central controller 201. A pull-up resistor R1 is connected in series between the power supply pin Vcc and the connection terminal A, and a pull-down resistor R2 is connected in series between the connection terminal B and the ground pin GND. The output receiving pin RO is connected to the power supply terminal VCC through a resistor R11, and the output receiving pin RO is connected to the first data receiving pin RXD1 of the master control chip IC1 and the switch circuit 3 and is configured to output a data signal received by the connection terminal A and the connection terminal B to the master control chip IC1 and/or the switch circuit 3. The input transmitting pin DI is connected to the first data transmitting pin TXD1 of the master control chip IC1 and the switch circuit 3 and is configured to transmit a signal input by the master control chip IC1 and/or the switch circuit 3 to the connection terminal A and the connection terminal B.

The transmit enable pin DE is respectively connected to the first enable pin EN1 of the master control chip IC1 and the switch circuit 3 and is configured to control a working mode of the first RS485 chip IC2; and when a high level signal is received, the transmit enable pin DE controls the working mode of the first RS485 chip IC2 to be a transmitting mode.

The receive enable pin RE is respectively connected to the first enable pin EN1 of the master control chip IC1 and the switch circuit 3 and is configured to control the working mode of the first RS485 chip IC2; and when a low level signal is received, the receive enable pin RE controls the working mode of the first RS485 chip IC2 to be a receiving mode.

The second RS485 chip IC3 includes a power supply pin Vcc, a ground pin GND, a connection terminal A, a connection terminal B, an input transmitting pin DI, a transmit enable pin DE, a receive enable pin RE, and an output receiving pin RO.

The power supply pin Vcc and the ground pin GND are respectively connected to a power supply terminal VCC and the ground terminal GND and are configured to supply power to the second RS485 chip IC3. The connection terminal A and the connection terminal B are connected to the slave control chip 202 and are configured to implement data transmission between the second RS485 chip IC3 and the slave control chip 202. A pull-up resistor R3 is connected in series between the power supply pin Vcc and the connection terminal A, and a pull-down resistor R4 is connected in series between the connection terminal B and the ground pin GND. The output receiving pin RO is connected to the power supply terminal VCC through a resistor R12, and the output receiving pin RO is connected to a second data receiving pin RXD2 of the master control chip IC1 and the switch circuit 3 and is configured to output a data signal received by the connection terminal A and the connection terminal B to the master control chip IC1 and/or the switch circuit 3. The input transmitting pin DI is connected to a second data transmitting pin TXD2 of the master control chip IC1 and the switch circuit 3 and is configured to transmit a signal input by the master control chip IC1 and/or the switch circuit 3 to the connection terminal A and the connection terminal B.

The transmit enable pin DE is respectively connected to the second enable pin EN2 of the master control chip IC1 and the switch circuit 3 and is configured to control a working mode of the second RS485 chip IC3; and when a high level signal is received, the transmit enable pin DE controls the working mode of the second RS485 chip IC3 to be a transmitting mode.

The receive enable pin RE is respectively connected to the second enable pin EN2 of the master control chip IC1 and the switch circuit 3 and is configured to control a working mode of the second RS485 chip IC3; and when a low level signal is received, the receive enable pin RE controls the working mode of the second RS485 chip IC3 to be a receiving mode.

In the second embodiment of the present invention, the switch circuit 3 includes a buffer IC4, an inverter IC5, and a level conversion circuit 30. The buffer IC4 is respectively connected to the first RS485 chip IC2 and the second RS485 chip IC3 and is configured to transmit a data signal between the first RS485 chip IC2 and the second RS485 chip IC3, thereby allowing the first RS485 chip IC2 and the second RS485 chip IC3 to directly communicate with each other. The inverter IC5 is respectively connected to the first RS485 chip IC2 and the second RS485 chip IC3 and is configured to transmit a control signal, that is, an enable signal to the first RS485 chip IC2 and the second RS485 chip IC3, thereby allowing the working modes of the first RS485 chip IC2 and the second RS485 chip IC3 to be automatically switched.

The buffer IC4 includes a power supply pin Vcc, a ground pin GND, a first enable pin 1OE, a second enable pin 2OE, a buffer first input terminal 1A, a buffer first output terminal 1Y, a buffer second input terminal 2A, and a buffer second output terminal 2Y. The power supply pin Vcc and the ground pin GND are respectively connected to a power supply terminal VCC and the ground terminal GND and are configured to supply power to the buffer IC4. The first enable pin 1OE and the second enable pin 2OE are connected to the switch pin SW of the master control chip IC1 and are configured to control a working state of the buffer IC4. When the first enable pin 1OE and the second enable pin 2OE receive a high level signal, the buffer IC4 enters an enabled state; and when the first enable pin 1OE and the second enable pin 2OE receive a low level signal, the buffer IC4 enters a disabled state.

The buffer first input terminal 1A is connected to the output receiving pin RO of the first RS485 chip IC2 and is configured to receive a signal from the first RS485 chip IC2. The buffer first output terminal 1Y is connected to the input transmitting pin DI of the second RS485 chip IC3 and is configured to transmit the signal received by the buffer first input terminal 1A. The buffer second input terminal 2A is connected to the output receiving pin RO of the second RS485 chip IC3 and is configured to receive a signal from the second RS485 chip IC3. The buffer second output terminal 2Y is connected to the input transmitting pin DI of the first RS485 chip IC2 and is configured to transmit the signal received by the buffer second input terminal 2A. A resistor R5 is connected in series between the buffer first output terminal 1Y and the power supply terminal VCC, and a resistor R6 is connected in series between the buffer second output terminal 2Y and the power supply terminal VCC.

The inverter IC5 includes a power supply pin Vcc, a ground pin GND, a first enable pin 1OE, a second enable pin 2OE, an inverter first input terminal 1A, an inverter first output terminal 1Y, an inverter second input terminal 2A, and an inverter second output terminal 2Y. The power supply pin Vcc and the ground pin GND are respectively connected to a power supply terminal VCC and the ground terminal GND and are configured to supply power to the inverter IC5. The first enable pin 1OE and the second enable pin 2OE are connected to the switch pin SW of the master control chip IC1 and are configured to control a working state of the inverter IC5. When the first enable pin 1OE and the second enable pin 2OE receive a low level signal, the inverter IC5 enters an enabled state, and when the first enable pin 1OE and the second enable pin 2OE receive a high level signal, the inverter IC5 enters a disabled state. The inverter first input terminal 1A is connected to the output receiving pin RO of the first RS485 chip IC2 and is configured to receive a signal from the first RS485 chip IC2. The inverter first output terminal 1Y is respectively connected to the transmit enable pin DE and the receive enable pin RE of the second RS485 chip IC3 and is configured to transmit an inverted signal of the signal received by the inverter first input terminal 1A. The inverter second input terminal 2A is connected to the output receiving pin RO of the second RS485 chip IC3 and is configured to receive a signal from the second RS485 chip IC3; and the inverter second output terminal 2Y is respectively connected to the transmit enable pin DE and the receive enable pin RE of the first RS485 chip IC2 and is configured to transmit an inverted signal of the signal received by the inverter second input terminal 2A. A resistor R14 and a capacitor C2 are sequentially connected in series between the inverter first output terminal 1Y and the ground terminal GND, and a resistor R13 and a capacitor C1 are sequentially connected in series between the inverter second output terminal 2Y and the ground terminal GND.

The level conversion circuit 30 is connected between the master control chip IC1 and the buffer IC4 and the inverter IC5 for level conversion, and controls the working states of the buffer IC4 and the inverter IC5. The level conversion circuit 30 includes a transistor Q1, a resistor R9, and a resistor R10. A base of the transistor Q1 is respectively connected to the switch pin SW of the master control chip IC1 and the first enable pin 1OE and the second enable pin 2OE of the buffer IC4, a collector is respectively connected to the power supply terminal VCC and the first enable pin 1OE and the second enable pin 2OE of the inverter IC5, and an emitter is connected to the ground terminal GND. The resistor R9 is connected in series between the base of the transistor Q1 and the switch pin SW of the master control chip IC1, and the resistor R10 is connected in series between the collector of the transistor Q1 and the power supply terminal VCC, thereby implementing current limiting protection.

When the switch pin SW of the master control chip IC1 outputs a low level, the base of the transistor Q1 is at a low level, the transistor Q1 is turned off, the buffer IC4 is in a disabled state, the collector is connected to the power supply terminal VCC at a high level, and the inverter IC5 is in a disabled state. When the switch pin SW of the master control chip IC1 outputs a high level, the base of the transistor Q1 is at a high level, the transistor Q1 is turned on, the buffer IC4 is in an enabled state, the collector is grounded at a low level, and the inverter IC5 is in an enabled state. Thus, the buffer IC4 and the inverter IC5 are synchronously controlled to be enabled/disabled.

In the second embodiment of the present invention, a working principle of the communication circuit 100 is as follows.

The master control chip IC1 receives and analyzes signals transmitted by the central controller 201 and the slave control chip 202 in real time through the first RS485 chip IC2 and the second RS485 chip IC3.

When the master control chip IC1 executes signal transmission, the switch pin SW of the master control chip IC1 outputs a low level signal of 0, the buffer IC4 and the inverter IC5 are disabled, and the first RS485 chip IC2 and the second RS485 chip IC3 work independently.

If the central controller 201 transmits data to the master control chip IC1 with a high level signal, a truth table of the communication circuit 100 is shown in Table 1. A transmission signal A1B1 of the central controller 201 is a high level signal of 1, the first enable pin EN1 of the master control chip IC1 outputs a low level signal of 0, the receive enable pin RE and the transmit enable pin DE of the first RS485 chip IC2 receive the low level signal of 0, the first RS485 chip IC2 enters the receiving mode, and the output receiving pin RO of the first RS485 chip IC2 receives the high level signal of 1 and outputs the high level signal of 1 to the first data receiving pin RXD1 of the master control chip IC1. Thus, the master control chip IC1 can receive high-level signal data transmitted by the central controller 201.

**Table 1**

| IC1-SW | IC4-OE | IC5-OE | A1B1 | IC2-DE/RE | IC2-RO | IC1-RXD1 |
|---|---|---|---|---|---|---|
| 0 | 0 | 1 | 1 | 0 | 1 | 1 |

If the master control chip IC1 transmits data to the slave control chip 202 with a low level signal, the truth table of the communication circuit 100 is shown in Table 2. The second data receiving pin TXD1 of the master control chip IC1 outputs a low level signal of 0, the second enable pin EN2 of the master control chip IC1 outputs a high level signal of 1, the receive enable pin RE and the transmit enable pin DE of the second RS485 chip IC3 receive the high level signal of 1, the second RS485 chip IC3 enters the transmitting mode, the input transmitting pin DI of the second RS485 chip IC3 outputs the low level signal of 0 input by the second data receiving pin TXD1 of the master control chip IC1 to the slave control chip 202, and a transmission signal A2B2 of the slave control chip 202 is at the low level signal of 0. Thus, the slave control chip 202 can receive low-level signal data transmitted by the master control chip IC1.

**Table 2**

| IC1-SW | IC4-OE | IC5-OE | IC 1-TXD2 | IC3-DE/RE | IC3-DI | A2B2 |
|---|---|---|---|---|---|---|
| 0 | 0 | 1 | 0 | 1 | 0 | 0 |

When the first data bus transceiver 21 and the second data bus transceiver 22 are required to be directly connected, the switch pin SW of the master control chip IC1 outputs a high level signal of 1, the buffer IC4 and the inverter IC5 are enabled, and meanwhile, the first enable pin EN1 and the second enable pin EN2 of the master control chip IC1 are changed to a high-resistance state, and working mode control of the first RS485 chip IC2 and the second RS485 chip IC3 is relinquished.

If the central controller 201 transmits data directly to the slave control chip 202, the truth table of the communication circuit 100 is shown in Table 3.

**Table 3**

| IC1-SW | IC4-OE | IC5-OE | A1B1 | IC2-RO | IC5-1Y IC3-DE/RE | IC3-DI | A2B2 |
|---|---|---|---|---|---|---|---|
| 1 | 1 | 0 | 0 | 0 | 1 | 0 | 0 |
| 1 | 1 | 0 | 1 | 1 | 0 | 1 | 1 |

The central controller 201 transmits data to the slave control chip 202 with a low level signal, the transmission signal A1B1 of the central controller 201 is a low level signal of 0, the output receiving pin RO of the first RS485 chip IC2 is the low level signal of 0, the inverter first output terminal 1Y of the inverter IC5 outputs an inverted signal, that is, a high level signal of 1, the receive enable pin RE and the transmit enable pin DE of the second RS485 chip IC3 receive the high level signal of 1, and the second RS485 chip IC3 enters the transmitting mode; and the buffer first output terminal 1Y of the buffer IC4 outputs a low level signal of 0, the input transmitting pin DI of the second RS485 chip IC3 outputs the low level signal of 0 to the slave control chip 202, and the transmission signal A2B2 of the slave control chip 202 is the low level signal of 0. Thus, the slave control chip 202 can directly receive low-level signal data transmitted by the central controller 201.

The central controller 201 transmits data to the slave control chip 202 with a high level signal, the transmission signal A1B1 of the central controller 201 is a high level signal of 1, the output receiving pin RO of the first RS485 chip IC2 is the high level signal of 1, the inverter first output terminal 1Y of the inverter IC5 outputs an inverted signal, that is, a low level signal of 0, the receive enable pin RE and the transmit enable pin DE of the second RS485 chip IC3 receive the low level signal of 0, and the second RS485 chip IC3 enters the receiving mode. The pull-up resistor R3 and the pull-down resistor R4 connected to the connection terminal A and the connection terminal B of the second RS485 chip IC3 pull up the transmission signal A2B2 of the slave control chip 202 to the high level signal of 1. Thus, the slave control chip 202 can directly receive high-level signal data transmitted by the central controller 201.

If the slave control chip 202 transmits data directly to the central controller 201, the truth table of the communication circuit 100 is shown in Table 4.

**Table 4**

| IC1-SW | IC4-OE | IC5-OE | A2B2 | IC3-RO | IC5-2Y IC2-DE/RE | IC2-DI | A1B1 |
|---|---|---|---|---|---|---|---|
| 1 | 1 | 0 | 0 | 0 | 1 | 0 | 0 |
| 1 | 1 | 0 | 1 | 1 | 0 | 1 | 1 |

The slave control chip 202 transmits data to the central controller 201 with a low level signal, the transmission signal A2B2 of the slave control chip 202 is a low level signal of 0, the output receiving pin RO of the second RS485 chip IC3 is the low level signal of 0, the inverter second output terminal 2Y of the inverter IC5 outputs an inverted signal, that is, a high level signal of 1, the receive enable pin RE and the transmit enable pin DE of the first RS485 chip IC2 receive the high level signal of 1, and the first RS485 chip IC2 enters the transmitting mode; and the buffer second output terminal 2Y of the buffer IC4 outputs a low level signal of 0, the input transmitting pin DI of the first RS485 chip IC2 outputs the low level signal of 0 to the central controller 201, and the transmission signal A1B2 of the central controller 201 is the low level signal of 0. Thus, the central controller 201 can directly receive low-level signal data transmitted by the slave control chip 202.

The slave control chip 202 transmits data to the central controller 201 with a high level signal, the transmission signal A2B2 of the slave control chip 202 is a high level signal of 1, the output receiving pin RO of the second RS485 chip IC3 is the high level signal of 1, the inverter second output terminal 2Y of the inverter IC5 outputs an inverted signal, that is, a low level signal of 0, the receive enable pin RE and the transmit enable pin DE of the first RS485 chip IC2 receive the low level signal of 0, and the first RS485 chip IC2 enters the receiving mode. The pull-up resistor R1 and the pull-down resistor R2 connected to the connection terminal A and the connection terminal B of the first RS485 chip IC2 pull up the transmission signal A1B1 of the central controller 201 to the high level signal of 1. Thus, the central controller 201 can directly receive high-level signal data transmitted by the slave control chip 202.

In the embodiment, transmission and reception between the first data bus transceiver 21 and the second data bus transceiver 22 in the communication circuit 100 are automatic, and the master control chip 1 does not need to control a data transmission direction. Regardless of whether the switch circuit 3 is turned on or turned off, the master control chip 1 can monitor communication data transmitted and received by the first data bus transceiver 21 and the second data bus transceiver 22 in real time. After receiving a complete frame of data packet, the master control chip 1 analyzes the data packet, and can control on/off of the switch circuit 3 according to a requirement of data analysis, that is, control switching of a data transmission path between the first data bus transceiver 21 and the second data bus transceiver 22.

It is worth mentioning that in the embodiment, the switch circuit 3 composed of the buffer IC4 and the inverter IC5 is taken as an example to explain the principle of the communication circuit 100. In other embodiments of this invention, functions of data transmission and automatic switching of transmission direction between the buses described above may also be implemented in a form of a combination of other chips and/or circuits, which is not limited herein.

### [Third Embodiment]

FIG. 4 is a schematic diagram of a communication system according to a third embodiment of the present invention.

As shown in FIG. 4, in the third embodiment of the present invention, a communication system 300 is provided, including a central controller 301, a slave control chip 302, and the communication circuit 100 described in the embodiments described above. The first data bus transceiver 21 in the communication circuit 100 connects the master control chip 1 and the central controller 301, and the second data bus transceiver 22 connects the master control chip 1 and the slave control chip 302.

In the third embodiment of the present invention, the central controller 301 can directly execute signal transmission to the slave control chip 302 without using the master control chip 1, thereby implementing actions on the slave control chip 302 such as parameter control and program updating, which greatly improves the efficiency of data transmission and system maintenance.

### [Fourth Embodiment]

FIG. 5 is a schematic diagram of an air conditioning system according to a fourth embodiment of the present invention.

As shown in FIG. 5, in the fourth embodiment of the present invention, an air conditioning system 400 is further provided, including a host 403, a first external device 401, and at least one second external device 402, and the host 403 includes the communication circuit 100 in the embodiments described above. One end of the first data bus transceiver 21 in the communication circuit 100 is connected to the master control chip 1, the other end thereof is connected to the first external device 401, and the first data bus transceiver 21 is configured to implement data communication between the master control chip 1 and the first external device 401. One end of the second data bus transceiver 22 is connected to the master control chip 1, the other end thereof is connected to the at least one second external device 402, and the second data bus transceiver 22 is configured to implement data communication between the master control chip 1 and one or a plurality of second external devices 402.

In the fourth embodiment of the present invention, the first external device 401 can directly execute signal transmission to the second external device 402 without using the host 403, thereby implementing actions on the plurality of second external devices 402 such as direct parameter control and program updating, which greatly improves the efficiency of data transmission and system maintenance.

For example, in an embodiment of the present invention, the first external device 401 may be a centralized controller of a central air conditioner upper computer, and the second external device 402 may be a slave outdoor unit or a slave indoor unit, thereby allowing the centralized controller of a central air conditioner upper computer to directly access and control the slave outdoor unit or the slave indoor unit.

For another example, in an embodiment of the present invention, the first external device 401 may be a centralized controller of a central air conditioner upper computer, and the second external device 402 may be an outdoor unit device such as a compressor, a fan, and a frequency converter, thereby allowing the centralized controller of a central air conditioner upper computer to directly access and control the outdoor unit device such as a compressor, a fan, and a frequency converter.

For another example, in an embodiment of the present invention, the first external device 401 may be a central air conditioner master outdoor unit, and the second external device 402 may be an indoor unit device such as various sensors, thereby allowing the central air conditioner master outdoor unit to directly access and control the indoor unit device such as various sensors.

**In** this embodiment, the host 403, the first external device 401, and the at least one second external device 402 in the air conditioning system 400 may be any indoor unit or outdoor unit in the air conditioning system 400 such as an air conditioner and a heat exchanger, which is not limited herein.

The technical solutions of the present invention have been described with reference to the accompanying drawings. However, it is easily understood by those skilled in the art that the protection scope of the present invention as set out in the appended claims is obviously not limited to these specific embodiments. Those skilled in the art can make equivalent changes or substitutions to related technical features without departing from the principle of the present invention, and the technical solutions after these changes or substitutions shall fall within the protection scope of the present invention.

## Claims

1. A communication circuit (100), comprising:
a master control chip (1);
a first data bus transceiver (21) having one end connected to the master control chip and the other end connected to a first external device (401);
a second data bus transceiver (22) having one end connected to the master control chip and the other end connected to a second external device (402); and
a switch circuit (3) connected to the first data bus transceiver and the second data bus transceiver.

2. The communication circuit (100) according to claim 1, wherein the master control chip (1) is connected to the switch circuit (3) to control on/off of the switch circuit.

3. The communication circuit (100) according to claims 1 or 2, wherein the first data bus transceiver (21) is a first RS485 chip (IC2), and the second data bus transceiver (22) is a second RS485 chip (IC3).

4. The communication circuit (100) according to claim 3, wherein the switch circuit (3) includes:
a buffer (IC4) respectively connected to the first RS485 chip (IC2) and the second RS485 chip (IC3); and
an inverter (IC5) respectively connected to the first RS485 chip and the second RS485 chip.

5. The communication circuit (100) according to claim 4, wherein the buffer (IC4) includes:
a buffer first input terminal connected to an output receiving pin of the first RS485 chip (IC2);
a buffer first output terminal connected to an input transmitting pin of the second RS485 chip (IC3);
a buffer second input terminal connected to an output receiving pin of the second RS485 chip; and
a buffer second output terminal connected to an input transmitting pin of the first RS485 chip.

6. The communication circuit (100) according to claims 4 or 5, wherein the inverter (IC5) includes:
an inverter first input terminal connected to the output receiving pin of the first RS485 chip (IC2);
an inverter first output terminal connected to a receive enable pin and a transmit enable pin of the second RS485 chip (IC3);
an inverter second input terminal connected to the output receiving pin of the second RS485 chip; and
an inverter second output terminal connected to a receive enable pin and a transmit enable pin of the first RS485 chip.

7. The communication circuit (100) according to any of claims 3 to 6, wherein a communication pin of the first RS485 chip (IC2) and a communication pin of the second RS485 chip (IC3) are both connected with a pull-up resistor and/or a pull-down resistor.

8. The communication circuit (100) according to any of claims 4 to 7, wherein the master control chip (1) includes:
a switch signal pin respectively connected to an enable pin of the buffer (IC4) and an enable pin of the inverter (IC5);
an enable pin respectively connected to the first RS485 chip (IC2) and the second RS485 chip (IC3);
a data receiving pin respectively connected to the first RS485 chip and the second RS485 chip; and
a data transmitting pin respectively connected to the first RS485 chip and the second RS485 chip.

9. A communication system (300), comprising: a central controller (301); a slave control chip (302); and the communication circuit (100) according to any of claims 1 to 8, wherein a first data bus transceiver (21) is connected to the central controller, and a second data bus transceiver (22) is connected to the slave control chip.

10. An air conditioning system (400), comprising: a host (403); a first external device (401); and at least one second external device (402), wherein the host includes the communication circuit (100) according to any of claims 1 to 8, a first data bus transceiver (21) is connected to the first external device, and a second data bus transceiver (22) is connected to the at least one second external device.
